# EUROPEAN PATENT SPECIFICATION

(11) **EP 4 606 082 B1**
(45) Date of publication and mention of the grant of the patent: **02.12.2026**
(21) Application number: 23790551.8
(22) Date of filing: 10.10.2023
(51) Int. Cl.: H04L 47/74

(54) **SLICE SELECTION FOR DATA TRAFFIC ROUTING IN A VISITED NETWORK**
SLICE-AUSWAHL FÜR DATENVERKEHRSROUTING IN EINEM BESUCHTEN NETZWERK
SÉLECTION DE TRANCHE POUR ROUTAGE DE TRAFIC DE DONNÉES DANS UN RÉSEAU VISITÉ

(30) Priority: 18.10.2022 EP 22202041
(43) Date of publication of application: 27.08.2025
(73) Proprietor: Koninklijke KPN N.V., 3072 AP Rotterdam (NL); Nederlandse Organisatie voor toegepast-natuurwetenschappelijk onderzoek TNO, 2595 DA 's-Gravenhage (NL)
(72) Inventor: NOOREN, Pieter, 2628 ZM DELFT (NL); DE SOUZA SCHWARTZ, Ramon, 1083 JN Amsterdam (NL)
(74) Representative: De Vries & Metman
(86) International application number: PCT/EP2023/078059
(87) International publication number: WO 2024/083572

(56) References cited:
- WO-A1-2021/069056
- WO-A1-2022/069989
- US-A1- 2022 264 540

## Description

### TECHNICAL FIELD

The invention relates to a system and computer-implemented method for providing a user equipment (UE) with a route selection policy (RSP) for data traffic routing. The invention further relates to one or a plurality of network node(s) configured to implement the system, and to a user equipment (UE) comprising the system as a subsystem. The invention further relates to a computer-readable medium comprising data for causing a processor system to perform the computer-implemented method.

### BACKGROUND

Network virtualisation has developed into an established concept in the mobile network industry. Network virtualization techniques have already assumed a prominent role in 5G mobile networks and are expected to be of key importance in future mobile networks as well, such as 6G or later mobile networks. In 5G networks, network virtualisation techniques are used to, among other things, create separate and isolated virtual network slices, with the slice properties tailored to the needs of end users and to the applications that send and/or receive data via such network slices.

Roaming is another established concept in mobile networking. Through roaming, users may not only use network services from the mobile network for which they have a subscription (home network) but also from other mobile networks (visited networks). To enable roaming, the home network and a visited network may typically need to be connected via roaming interfaces and, in addition, commercial agreements may need to be in place between the network operators for wholesale charging.

Following the earlier success of international roaming for voice and internet access services, 3GPP and GSMA have developed standards and guidelines for the handling of network slices in roaming situations. As network slicing is typically aimed at applications that require a higher performance, e.g., in terms of bandwidth, latency, jitter, etc., than the performance which is typically provided by a visited network on a 'best effort' basis, the selection of a suitable network slice for an application in roaming situations may be important, in the same or similar way as it may be important to select a network slice for an application in the home network in non-roaming situations.

The selection of the network slice to be used for the data traffic from a given application may be prescribed by a so-called route selection policy. The following refers to the route selection policy in 5G mobile networks, which is called UE Route Selection Policy (URSP), but may equally apply to other types of route selection policies. The URSP may be installed on the UE by the home operator and may contain policies that govern slice selection. Among other things, the URSP may start from an application as an input to select a network slice. This mapping from application to network slice may also be referred to as an 'application-slice mapping'. To provide such a mapping, a route selection policy may contain a set of rules or may be structured as a look-up table, etc. TS 23.503 [1] describes slice selection by a URSP in more detail. Accordingly, when an application requests set up of a Protocol Data Unit (PDU) session, the UE may use the URSP to determine in which network slice the session is to be set up.

A UE may be provided with a route selection policy by a network function. For example, the URSP may be provisioned in the UE by a Policy Control Function (PCF). In roaming situations, the Home PCF (H-PCF) and Visited PCF (V-PCF) may interact. More specifically, the H-PCF may interact with the Home Unified Data Repository (H-UDR) to obtain information on applications so as to be able to determine the URSP. The H-PCF may then send the URSP to the V-PCF and the V-PCF may transparently pass the URSP via the Access and Mobility Function (AMF) to the UE.

However, a problem may arise when the URSP mechanism is applied in a roaming situation, e.g., when the UE is in a visited network, such as VPLMN (Visited Public Land Mobile Network). Namely, the H-PCF may generate the URSP only taking network slices into account that are known in the home network, e.g., in the HPLMN (Home Public Land Mobile Network). Indeed, TS 23.501 [2] prescribes that "The S-NSSAls in the NSSP of the URSP rules (see clause 6.6.2 of TS 23.503 [45]) and in the Subscribed S-NSSAIs (see clause 5.15.3) contain only HPLMN S-NSSAI values".

This may be problematic since network slices which are available for use in the HPLMN may not be available for use in the VPLMN. For example, a network slice may simply be unavailable (i.e., it may not exist) in the VPLMN, or the performance level provided by the network slice may differ between the HPLMN and the VPLMN.

For example, the performance of the so-called eMBB slice, aimed at providing general purpose broadband internet access, is likely to differ between mobile networks and therefore also between the HPLMN and VPLMNs during roaming. Furthermore, different mobile operators may group the applications they serve with their network slices differently, because of different business or organisational considerations, leading to differences in the technical properties between slices supported in the many operator networks. Although 3GPP and GSMA aim to minimise these differences through the use of standardised slices, e.g., as captured in slice
templates and made available in shared repositories, it cannot be expected that mobile networks around the world support the same set of technically identical network slices.

Accordingly, the application-slice mappings in the URSP defined by a home operator may not always be suitable for selecting network slices in a visited network.

TS 23.501 [2] section 5.15.4.1.2 and reference [3] describe a mechanism to map a network slice in a HPLMN to another network slice in a VPLMN. Disadvantageously, such slice-slice mappings require all applications which make use of a particular network slice in the home network to use the designed network slice in the visited network, which may be disadvantageous, as fundamentally disregards the approach of the URSP in allowing network slices to be selected on an application level.

Reference [4] also concerns roaming and network slice selection but addresses a different problem, namely, how to enable a UE to use an application which is not known in the HPLMN, and thus not identified in the URSP, in the VPLMN.

WO2021069056A1 relates to provisioning and enforcement of network slice information in a communication network. A first network entity received a network slice information request, NSIR, from a second network entity, wherein the NSIR indicates at least one of a network slice information and/or a client device identity, ID. In response to the reception of the NSIR, the first network entity obtains and transmits a network slice information notification, NSIN, to the second network entity. The NSIN indicates a network slice control information comprising at least part of the network slice information and a network slice policy information.

US2022/264540 discloses systems and methods receiving an indication that an application on a user device has been launched; determining subscription information associated with the user device or a provider of the application, wherein the subscription information includes an indication of one or more recommended network slices to use for traffic associated with the application; and initiating a data session with the user device for sending and receiving the traffic associated with the application via a recommended network slice of the one or more recommended network slices.

### References

[1] 3GPP TS 23.503 V17.6.0 (2022-09), Technical Specification, 3rd Generation Partnership Project; Technical Specification Group Services and System Aspects; Policy and charging control framework for the 5G System (5GS); Stage 2 (Release 17)
[2] 3GPP TS 23.501 V17.6.0 (2022-09), Technical Specification, 3rd Generation Partnership Project; Technical Specification Group Services and System Aspects; System architecture for the 5G System (5GS); Stage 2 (Release 17)
[3] WO 2018/234085
[4] US 2020/0304983

### SUMMARY

In a first aspect of the invention, a computer-implemented method is provided for providing a user equipment with a route selection policy for data traffic routing in a visited network. The route selection policy comprises one or more mappings associating applications with respective network slices of a network, wherein a mapping comprises an application identifier of an application and a slice identifier of a network slice to be selected by the user equipment for data traffic of the application. The method comprises:
- obtaining a route selection policy for a home network of the user equipment, thereby obtaining a home route selection policy;
- for at least one application which is listed in the home route selection policy and for which application the network slice identified in the home route selection policy is not available for use in the visited network for data traffic of the application, determining a replacement network slice which is available for use in the visited network for the data traffic of the application;
- generating an updated route selection policy, wherein the generating comprises modifying the home route selection policy to include a mapping associating the application with the replacement network slice; and
- providing the user equipment with access to the updated route selection policy.

In a further aspect of the invention, a system may be provided for providing a user equipment with a route selection policy for data traffic routing in a visited network. The route selection policy may comprise one or more mappings associating applications with respective network slices of a network, wherein a mapping may comprise an application identifier of an application and a slice identifier of a network slice to be selected by the user equipment for data traffic of the application. The system may comprise:
- a network interface;
- a processor subsystem which may be configured to:
   - via the network interface, obtain a route selection policy for a home network of the user equipment, thereby obtaining a home route selection policy;
   - for at least one application which may be listed in the home route selection policy and for which application the network slice identified in the home route selection policy may not be available for use in the visited network for data traffic of the application, determining a replacement network slice which is available for use in the visited network for the data traffic of the application;
   - generate an updated route selection policy, wherein the generating may comprise modifying the home route selection policy to include a mapping associating the application with the replacement network slice; and
   - provide the user equipment with access to the updated route selection policy.

In a further aspect of the invention, a transitory or non-transitory computer-readable medium is provided which may comprise data representing a computer program. The computer program may comprise instructions for causing a processor system to perform a computer-implemented method as described in this specification.

The above measures may involve providing a user equipment, such as a mobile device, with an updated route selection policy to enable the user equipment to select network slices for data traffic of respective applications. In particular, the updated route selection policy may be provided to the user equipment to enable the user equipment to select network slices in a visited network which is different from the home network of the user equipment. As elucidated in the background section, the user equipment is typically provided with a route selection policy by a policy control function of the home network (and which route selection policy is elsewhere also referred to as a *home* route selection policy or as a Home User equipment Route Selection Policy, H-URSP). This home route selection policy, however, may refer to one or more network slices which are not available for use in the visited network, e.g., due to non-existence of a network slice or due to other technical or commercial limitations preventing the use of the network slice in the visited network. In particular, the above measures concern the situation that for at least one application which is listed in the home route selection policy, the associated network slice identified in the home route selection policy is not available for use in the visited network for data traffic of the application.

The above measures may generate an updated route selection policy, which may also be referred to as an 'enhanced' route selection policy or as an Enhanced User equipment Route Selection Policy, E-URSP, on the basis of at least the home route selection policy from the home network. For that purpose, the home route selection policy may be modified, and thereby updated, by determining, for a network slice which is not available for use in the visited network for the data traffic of the application, a replacement network slice which is available for such use in the visited network. Accordingly, the updated route selection policy may be generated by modifying the home route selection policy such that the application, of which the network slice in the home route selection policy is unavailable for use in the visited network, is now associated with the replacement network slice. Such updating may for example comprise overwriting a slice identifier of the unavailable network slice with the slice identifier of the replacement network slice, or adding an entry for the application with the slice identifier of the available network slice while removing or marking as 'inactive' the previous entry of the application with the slice identifier of the unavailable network slice. Having generated the updated route selection policy, the updated route selection policy may be provided to the user equipment so as to enable the user equipment to select the replacement network slice for the application when roaming in, or otherwise making use of, the visited network.

It will be appreciated that although the above has been explained for a single application, there may be several applications listed in the home route selection policy of which the respective network slice(s) may be unavailable for use in the visited network. Accordingly, for each or at least a subset of these applications, a replacement network slice may be identified and included in the updated route selection policy. It will be appreciated that such a replacement network slice may be the same for several applications, e.g., when these applications were mapped to one particular network slice in the home route selection policy and when there is no reason (e.g., technical, commercial, or otherwise) for these applications to be mapped to different network slices in the visited network. However, even if different applications were mapped to a same network slice in the home route selection policy, the above measures may assign different replacement network slices to these different applications, as will be elucidated elsewhere in this specification. This way, the approach of the URSP, in which network slices are selected on an application level, may be maintained, in that for different applications, different replacement network slices may be selected.

For example, this way, if an eMBB network slice of the home network offers high performance and is used for data traffic of both a web-browser and a VR-based video conferencing application, and if an eMBB network slice of the visited network offers lower performance (and thus in fact represents a different network slice than the eMBB network slice of the home network), the data traffic of the web-browser may be mapped to the eMBB network slice of the visited network while the data traffic of the VR-based video conferencing application may be mapped to another network slice providing sufficient performance. This way, the above measures may differentiate between applications when selecting replacement network slices, which may avoid a 'one-size-fits-all' approach in which applications are assigned network slices in the visited network which provide either too much performance (which may be disadvantageous as providing such performance in a network slice may incur a technical and/or commercial cost) or insufficient performance.

The following embodiments may represent embodiments of the computer-implemented method for providing a user equipment with a route selection policy for data traffic routing in a visited network but may also represent embodiments of the system for providing a user equipment with a route selection policy for data traffic routing in a visited network, wherein the processor subsystem of the system is configured to perform corresponding computer-implemented method step(s).

In an embodiment, the method may further comprise:
- obtaining a route selection policy from the visited network, thereby obtaining a visited route selection policy; and
   - determining the replacement network slice from the visited route selection policy by determining the slice identifier listed for the application in the visited route selection policy.

In addition to obtaining the home route selection policy, also the route selection policy from the visited network may be obtained, e.g., from a policy control function in the visited network (and which route selection policy may elsewhere also be referred to as a *visited* route selection policy or as a Visited User equipment Route Selection Policy, V-URSP). The replacement network slice for the application may then be determined from the visited route selection policy. Effectively, the home route selection policy may be updated by, for an application of which the network slice is unavailable for use in the visited network, mapping the application to the network slice to which the application is mapped in the visited route selection policy. An advantage of this embodiment may be that the choice of network slice for the application may be adopted from the visited network, which may avoid having to redetermine the appropriate network slice over again. Moreover, the choice of the network slice for the application in the visited network is likely to be an intentional choice, e.g., providing a best match considering the requirements of the application. By adopting this choice from the visited network, the best match between application and network slice may be maintained. Effectively, the above measure may create a 'hybrid' route selection policy in which the route selection is principally governed by the home network except for applications of which the network slice is unavailable for use in the visited network; for these applications, the choice of network slice by the visited network may be adopted.

It is noted that in general, the updated route selection policy may be generated based on information on the application-slice mappings in the visited network. Such information may be obtained in form of the route selection policy of the visited network, but may also be obtained in any other form, for example as other information obtainable from a unified data repository in a respective network.

In an embodiment, generating the updated route selection policy may comprise overwriting the slice identifier for the application in the home route selection policy by the slice identifier listed for the application in the visited route selection policy. Overwriting may be an efficient way to adopt the choice of network slice from the visited network for the application in the home route selection policy.

In an embodiment, the overwriting may be performed selectively if the slice identifiers differ or indiscriminately by overwriting the slice identifiers for a set of applications in the home route selection policy by the slice identifiers listed for the set of applications in the visited route selection policy. The overwriting may thus be performed selectively if the slice identifiers for the application differ between the home route selection policy and the visited route selection policy. Alternatively, for a set of applications which are identified both in the home route selection policy and in the visited route selection policy, the choice of network slice of the visited route selection policy may be adopted by simply overwriting the slice identifiers listed in the home route selection policy for these applications by the slice identifiers identified in the visited route selection policy for these applications. This may avoid the need for a check if the network slices listed in the respective route selection policies differ.

In an embodiment, the method may further comprise:
- if slice correspondence data is available which maps network slices in a source network to corresponding network slices in a target network and which slice correspondence data comprises a mapping from the network slice identified in the home route selection policy to a replacement network slice which is available for use in the visited network, using the replacement network slice as provided by slice correspondence data in the updated route selection policy; and otherwise
- determining the replacement network slice from the visited route selection policy.

In accordance with the above measures, it may be first determined whether there is a global slice-slice mapping available which maps the network slice identified in the home route selection policy to a replacement network slice which is available for use in the visited network. Such a slice-slice mapping may for example be provided using the mechanisms described in TS 23.501 [2] section 5.15.4.1.2 and reference [3] to map a network slice in a HPLMN to another network slice in a VPLMN. If such a mapping is not available, or if the mapping does not apply to the network slice to be replaced, the replacement network slice may be determined from the visited route selection policy, e.g., in a manner as described elsewhere in this specification. This way, use may be made of slice-slice mappings, but if such mappings are not available or do not apply to the network slice to be replaced, a replacement network slice may nevertheless be determined using the earlier described measures.

In an embodiment, generating the updated route selection policy may comprise restricting a validity of the mapping of the application to the replacement network slice. The replacement network slice may be intended to be used in the visited network but not in the home network and potentially not in other visited networks. To avoid the user equipment using, or trying to use, the replacement network slice outside of the visited network for data traffic of the application, the validity of the mapping of the application to the replacement network slice may be restricted. For example, the validity may be restricted to a geolocation and/or restricted in time. The geolocation may for example correspond to a coverage area or country of the visited network. The time restriction may for example be defined in form of a time limit or expiry time or date. Once the user equipment leaves the geolocation and/or the time restriction expires, the user equipment may refrain from using the replacement network slice and may for example revert to the network slice originally identified in the home route selection policy or a request a new route selection policy to be sent, e.g., by a policy control function of the network currently serving the user equipment. This way, it may be avoided that the user equipment uses, or tries to use, a network slice which is not intended, and in fact may be currently not available for use, by the application.

In an embodiment, providing the user equipment with access to the updated route selection policy may comprise providing the updated route selection policy to a policy control function in the visited network for enabling the policy control function to provide the updated route selection policy to the user equipment. A route selection policy may be commonly provisioned to a user equipment by a policy control function of a network. By providing the updated route selection policy to the policy control function, the updated route selection policy may be provisioned to the user equipment using this existing delivery mechanism for route selection policies. It is therefore not needed to establish a separate delivery mechanism for the updated route selection policy.

In an embodiment, the method may further comprise providing the updated route selection policy to a policy control function in the home network. The policy control function in the home network may be principally responsible for provisioning the user equipment with the route selection policy. If, in accordance with the above measures, an updated route selection policy is provided to the user equipment, it may be desirable to keep the home network, and in particular the policy control function in the home network, informed of such updates. This may for example enable the policy control function to reprovision the user equipment with the home route selection policy, for example once the user equipment returns to the home network.

In an embodiment, the method may further comprise providing the updated route selection policy to an access and mobility management function in the home network to enable the access and mobility management function to include a mapping for the replacement network slice to a subscribed network slice in the home network. To ensure that the user equipment is also allowed to use the replacement network slice in the visited network, the updated route selection policy may be provided to the access and mobility management function in the home network, which function may create a mapping for the slice identifier of the replacement network slice to a slice identifier which is already included in subscription information for the user equipment.

In an embodiment, the method may be performed at or by the user equipment. The updated route selection policy may be generated by the user equipment itself. This may have the advantage that the user equipment may not need to rely on functionality in the network to generate such updated route selection policies. Another advantage may be that this way, only applications that are actually installed on the UE or actively in use by the UE may be considered when updating the route selection policy, rather than all the applications that may be listed in the URSP.

Alternatively, the updated route selection policy may be generated by an entity within the home network and/or the visited network, and the user equipment may be configured to receive and store the updated route selection policy and to select network slices for data of applications based on the updated route selection policy.

In an embodiment, the method may be performed by an application-slice mapping modification function which function may be part of, or connected to, a policy control function. The updated route selection policy may be generated by a network function which may be connected to the policy control function, in that it may be able to communicate with the policy control function, for example to send and/or receive route selection policies. Alternatively, the updated route selection policy may be generated by an internal function of the policy control function. This may be advantageous as obtaining route selection policies from, and providing route selection policies to, the policy control function may then not require external data communication.

In an embodiment, the method is performed by the application-slice mapping modification function which is part of, or connected to, a home policy control function in the home network, and wherein the updated route selection policy is generated by the application-slice mapping modification function based on application-slice mapping data which may be obtained by a unified data repository in the home network from a unified data repository in the visited network. Accordingly, the updated route selection policy may be generated by the home network, e.g., by its policy control function or by a separate application-slice mapping modification function in the home network. To obtain information on the network slices in the visited network, application-slice mapping data may be used which may be obtained from a unified data repository in the home network. Such application-slice mapping data may comprise information on available network slices in the visited network, which information may be obtained through data exchange between the unified data repository in the home network (also referred to as Home Unified Data Repository, or H-UDR) and a unified data repository in the visited network (also referred to as Visited Unified Data Repository, or V-UDR). Such data exchange may be performed on a regular basis and/or in response to a request by the application-slice mapping modification function. An advantage of this embodiment is that it may not be needed to obtain the visited route selection policy directly from the policy control function in the visited network.

In an embodiment, the method may be performed by the application-slice mapping modification function which may be part of, or connected to, a visited policy control function in the visited network, and wherein the updated route selection policy may be generated by the application-slice mapping modification function based on the home route selection policy and application-slice mapping data from a unified data repository in the visited network. Accordingly, the updated route selection policy may be generated by the visited network, e.g., by its policy control function or by a separate application-slice mapping modification function in the visited network.

In a further aspect of the invention, a network node or system of network nodes may be provided, which network node(s) may comprise the system as described in this specification, wherein the system may be configured to establish an application-slice mapping modification function in a network and configured for communicating with a policy control function of the network.

In an embodiment, the network node or system of network nodes may further implement the policy control function, wherein said communicating of the slice mapping modification function with the policy control function may be internal communication. Accordingly, the policy control function and the application-slice mapping modification function may both be implemented by one or more network nodes. In some embodiments, the application-slice mapping modification function may be a subfunction of the policy control function.

In a further aspect of the invention, a user equipment may be provided comprising the system as described in this specification as a subsystem. The functionality to generate the updated route selection policy may thus be internal functionality of the user equipment, e.g., implemented as a sub-system.

It will be appreciated by those skilled in the art that two or more of the above-mentioned embodiments, implementations, and/or aspects of the invention may be combined in any way deemed useful.

Modifications and variations of any one of the method, the system, the network node or system of network nodes, the user equipment, and the computer programs described in this specification, which correspond to the described modifications and variations of another one of these entities, or vice versa, may be carried out by a person skilled in the art on the basis of the present specification.

### BRIEF DESCRIPTION OF THE DRAWINGS

These and other aspects of the invention are apparent from and will be elucidated with reference to the embodiments described hereinafter. In the drawings,
Fig. 1 shows a H-PCF provisioning a UE with a URSP, wherein the UE is roaming in a visited network, and wherein the URSP is provisioned via a V-PCF;
Fig. 2 shows an embodiment in which an application-slice mapping management (ASMM) function is provided in the PCF of the visited network (V-PCF) and in which embodiment the ASMM function is configured to obtain a URSP from the PCF in the home network (H-PCF), update the URSP to obtain an enhanced URSP (E-URSP) and provide the E-URSP via the V-PCF to the UE;
Fig. 3 shows an embodiment in which an ASMM is provided in the H-PCF and configured to generate an E-URSP and provide the E-URSP to the UE;
Fig. 4 shows an embodiment in which an ASMM is provided in the UE and configured to obtain URSPs from the H-PCF and V-PCF and to generate the E-URSP;
Fig. 5 shows an embodiment in which the ASMM in the V-PCF makes use of information from the unified data repository in the visited network (V-UDR);
Fig. 6 shows an embodiment in which the ASMM in the H-PCF makes use of information which is obtained by the unified data repository in the home network (H-UDR) from the unified data repository in the visited network (V-UDR);
Fig. 7 shows an embodiment in which an ASMM in the V-PCF sends the E-PCF back to an ASMM in the H-PCF to inform the H-PCF of the E-URSP;
Fig. 8 shows an embodiment in which the access and mobility management function (AMF) in the home network is informed of the E-URSP to include a mapping for the replacement network slice to a subscribed network slice in the home network;
Fig. 9 shows an embodiment in which application-slice mapping information from the visited network is made available to the home network via a non-real time administrative process, for example an administrative process of a roaming agreement;
Fig. 10 shows a system for providing a user equipment with a route selection policy for data traffic routing in a visited network;
Fig. 11 shows a non-transitory computer-readable medium comprising data;
Fig. 12 shows an exemplary data processing system.

It should be noted that items which have the same reference numbers in different figures, have the same structural features and the same functions, or are the same signals. Where the function and/or structure of such an item has been explained, there is no necessity for repeated explanation thereof in the detailed description.

### Reference signs list

The following list of references and abbreviations is provided for facilitating the interpretation of the drawings and shall not be construed as limiting the claims.
- AMF: access and mobility management function
- ASMM: application-slice mapping modification function
- H (prefix): home
- PCF: policy control function
- UDR: unified data repository
- UE: user equipment
- (U)RSP: (user equipment) route selection policy
- V (prefix): visited

- 1-73: messages / steps in information exchange
- 80: updated route selection policy

- 100: home network
- 110: policy control function
- 120: application-slice mapping modification function
- 130: unified data repository
- 140: access and mobility management function

- 200: visited network
- 210: policy control function
- 220: application-slice mapping modification function
- 230: unified data repository
- 240: access and mobility management function

- 300: user equipment
- 310: application-slice mapping modification function
- 400: system
- 410: network interface
- 420: processor subsystem
- 430: data storage

- 500: computer-readable medium
- 510: non-transitory data

- 1000: exemplary data processing system
- 1002: processor
- 1004: memory element
- 1006: system bus
- 1008: local memory
- 1010: bulk storage device
- 1012: input device
- 1014: output device
- 1016: network adapter
- 1018: application

### DESCRIPTION OF EMBODIMENTS

The following embodiments may refer to mobile networks and entities of mobile networks which adhere to one or more 3GPP standards. It will be appreciated, however, that the concepts and mechanisms described in this specification may equally apply to any other type of mobile network. In particular, the following may refer to a route selection policy in form of the 3GPP route selection policy, i.e., a UE-route selection policy (URSP), but the concepts and mechanisms described in this specification may equally apply to any other type of route selection policy. It is further noted that use is made of abbreviations as defined elsewhere in this specification.

As is known per se, a route selection policy, such as for example a URSP, may be used by a UE of a mobile network to select a network slice for the data traffic for a given application. For that purpose, as is known per se, the URSP may contain specific policies that govern slice selection. Among other things, the URSP may receive an application as an input to select a network slice. This mapping from application to network slice may also be referred to as an 'application-slice mapping'. TS 23.503 [1] describes slice selection by a URSP in more detail. Accordingly, when an application requests set up of a data session, such as Protocol Data Unit (PDU) session, the UE may use the URSP to determine in which network slice the data session is to be set up.

The URSP may for example contain the following data:
- An Application Descriptor which may identify the application. The Application Descriptor may for example comprise an OSid, identifying the Operating System (OS) and an OSAppld, identifying the application, for example in form of a link to the application in an app store associated with the OS.
- A Traffic descriptor part which may comprise the Application Descriptor.
- A Network Slice Selection part which may comprise one (or more) Single Network Slice Selection Assistance Information (S-NSSAI) values which may represent identifiers of network slices. The Network Slice Selection may be part of the Route Selection component part of the URSP.

The following provides a simple example of an URSP. Here, it is assumed that home network or HPLMN (Home Public Land Mobile Network) has five network slices. An example of the application-slice mapping in the URSP is shown in Table 1.

**Table 1. Example URSP in HPLMN.**

| **URSP in HPLMN** | | | | |
|---|---|---|---|---|
| **Traffic descriptor** | | | **Network Slice Selection** | |
| **OSid** | **OSAppld** | **Comment** | **S-NSSAI** | **Comment** |
| android | 211 | Web browser | SST:1 | enhanced Mobile BroadBand (eMBB) |
| | | | SD:1 | |
| android | 339 | Extended sensoring | SST:1 | enhanced Mobile BroadBand (eMBB) |
| | | | SD:1 | |
| android | 462 | Audio streamer | SST:1 | enhanced Mobile BroadBand (eMBB) |
| | | | SD:1 | |
| android | 499 | Remote driving | SST:4 | vehicle-to-X (V2X) CCAM3 |
| | | | SD:8 | |
| android | 502 | Collision Avoidance | SST:4 | vehicle-to-X (V2X) CCAM1 |
| | | | SD:1 | |
| android | 782 | Predictive maintenance | SST:3 | massive Machine Type Comms (mMTC) |
| | | | SD:1 | |

For simplicity, the example only considers UEs that use the Android OS, and therefore the OSid is the same for all applications. Note that in practice, the OSid may be coded as a less readable string than suggested here with "android". This also applies to the OSAppld which may take more complicated forms than the numerical values in the example. There may also be multiple route selection components associated with a traffic descriptor, for example ordered according to precedence.

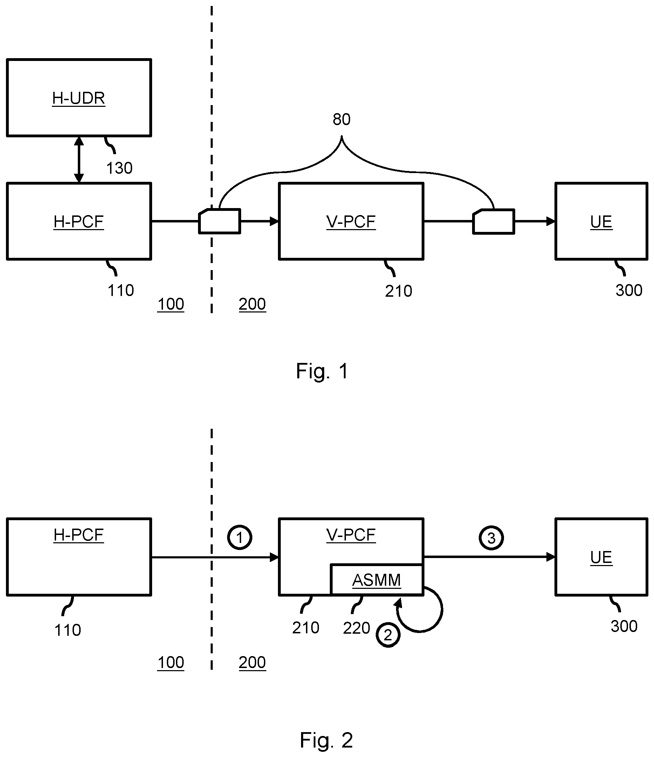

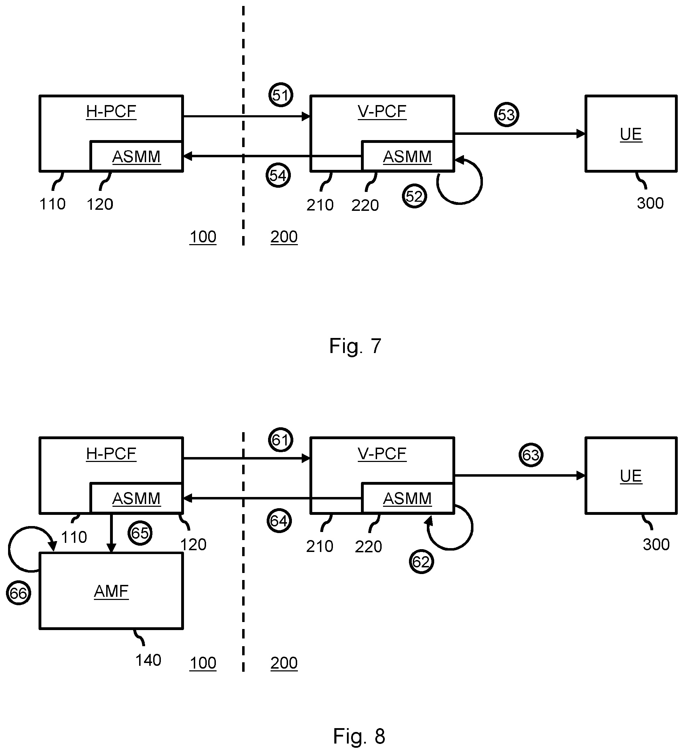

**Fig. 1** illustrates the provisioning of an URSP to a UE when the UE is roaming, or otherwise making use of, a visited network. In such a situation, the policy control function (PCF) 110 in the home network 100 (with the PCF also being referred to as H-PCF) may provide the URSP 80 to the UE 300 via the PCF 210 in the visited network 200 (also referred to as V-PCF). Although the URSP 80 is provisioned in the visited network 200 and via the V-PCF, the URSP 80 may be the identical to the URSP which would be provisioned by the H-PCF to the UE when the UE 300 would be located in the home network 100 under otherwise similar circumstances. It is noted that the H-PCF 110 may interact with the Home Unified Data Repository (H-UDR) 120 to obtain information on applications to determine the URSP 80. For example, the H-PCF 110 may obtain information on application-slice mappings from the H-UDR 130. Such information may for example be stored in the H-UDR 130 and in some cases gathered by the H-UDR 130, e.g., from UDRs in other networks. It is further noted that a PCF, such as the V-PCF 210, may transparently pass the URSP 80 via an Access and Mobility Function (AMF) of the respective network to the UE 300. However, in order to simplify the figures, the AMF has been omitted in Fig. 1 and others except for Fig. 8.

With continued reference to the application-slice mappings in the URSP 80, it is noted that the application-slice mappings may not always be suitable for selecting network slices in a visited network, for example due to the reasons as indicated in the background section. As an example, Table 2 shows a summarized version of the HPLMN's URSP from Table 1 together with an example of a VPLMN's URSP. The middle column qualifies, per application, a match or mismatch between the URSPs.

**Table 2. Example of URSPs in HPLMN and VPLMN with both matching and mismatching application-slice combinations.**

| **URSP in HPLMN** | | | | **URSP in VPLMN** | | |
|---|---|---|---|---|---|---|
| OSAppld | Comment | S-NSSAI | | OSAppld | | S-NSSAI |
| 211 | Web browser | SST:1 | OK | 211 | Web browser | SST:1 |
| | | SD:1 | | | | SD:1 |
| | | eMBB | | | | eMBB |
| 339 | Extended sensoring | SST:1 | Problem | 339 | Extended sensoring | SST:4 |
| | | SD:1 | | | | SD:1 |
| | | eMBB | | | | V2X |
| | | | | | | CCAM1 |
| 462 | Audio streamer | SST:1 | OK | 462 | Audio streamer | SST:1 |
| | | SD:1 | | | | SD:1 |
| | | eMBB | | | | eMBB |
| 499 | Remote driving | SST:4 | OK | 499 | Remote driving | SST:4 |
| | | SD:8 | | | | SD:12 |
| | | V2X | | | | V2X |
| | | CCAM3 | | | | CCAM9 |
| 502 | Collision Avoidance | SST:4 | Problem | 502 | Collision Avoidance | SST:1 |
| | | SD:1 | | | | SD:1 |
| | | V2X | | | | eMBB |
| | | CCAM1 | | | | |
| - | - | | OK | 511 | Metaverse | SST:9 |
| | | | | | | SD:2 |
| | | | | | | XR3 |
| 782 | Predictive maintenance | SST:3 | OK | 782 | Predictive maintenance | SST:3 |
| | | SD:1 | | | | SD:1 |
| | | mMTC | | | | mMTC |

- For the web browser application 211, the URSP rules are identical. The application-slice mapping of the HPLMN may thus be OK for the VPLMN.
- For the extended sensoring application 339, there may be a problem. In the HPLMN, the eMBB slice may be sufficient. However, the eMBB slice in the VPLMN may not provide the required performance and the application may therefore need to be associated with another slice, for example V2X CCAM1.
- For the audio streaming application 462, the URSP rules are identical. The application-slice mapping of the HPLMN may thus be OK for the VPLMN.
- For the remote driving application 499, the application-slice mapping may be OK for the VPLMN as the V2X CCAM3 slice in the HPLMN and the V2X CCAM9 slice in the VPLMN may be technically identical and only differ in their naming. This correspondence may be known from slice-slice mappings, e.g., as defined by TS 23.501 [3] or [4], for example by such slice-slice mapping containing an entry which maps the V2X CCAM3 slice to the V2X CCAM9 slice and/or vice versa.
- For the collision avoidance application 502, there may be a problem even though the CCAM 1 slice may exist both in the HPLMN and the VPLMN. Namely, using the URSP from the HPLMN, the application may be mapped to CCAM1 in the VPLMN, while the application should be mapped to the eMBB slice. It is noted that such mapping to the eMBB slice may be the result of a requirement following from the EU's open internet regulation: if the eMBB slice in the VPLMN is sufficient to support the application, the VPLMN may not be allowed to provide it as a so-called specialised service. Since the URSP from the VPLMN already maps this application to the eMBB slice of the VPLMN, the performance of the eMBB slice in the VPLMN is apparently sufficient.
- For the Metaverse application 511, the application and associated slice may not be known in the HPLMN. The slice may therefore not be selected by the UE based on a URSP that contains only S-NSSAls from the HPLMN alone. However, a slice may be selected for the Metaverse application 511 using for example the slice selection mechanism described in reference [4].
- For the predictive maintenance application 782, the URSP rules are identical. The application-slice mapping of the HPLMN may thus be OK for the VPLMN.

The following embodiments may address one or more of the problems mentioned in relation to Table 2 by adopting application-slice mappings from the URSP from the VPLMN in order to update the URSP of the HPLMN. Such updating may also be referred to as 'enhancing' or 'enriching' of the URSP, with the resulting URSP being equally referred to as an updated URSP, enhanced URSP or enriched URSP. The following also refers to application-slice mappings being implemented by rules. It will be appreciated, however, that such mappings may also be implemented in any other way, e.g., as an entry in a look-up table or the like, and that mappings being generated may comprise existing mappings being modified, e.g., by overwriting slice identifiers.

**Fig. 2** shows a first embodiment with the following characteristics:
- The UE 300 may be roaming in a VPLMN 200.
- The H-PCF 110 in the HPLMN 100 may be connected to the V-PCF 210 in the VPLMN 200 in that it may be able to communicate with the V-PCF.
- An Application-Slice Mapping Modification (ASMM) function 220 may be provided, which in the Fig. 2 embodiment may be provided in the V-PCF.

In the embodiment of Fig. 2, the following steps may be conducted. Here and elsewhere, the numbering of the steps may correspond to the numbering which is encircled in the respective figure.
1. The H-PCF may send the URSP to the V-PCF in the VPLMN, for example according to existing procedures as defined in TS 23.502 section 4.16.12.2. This URSP may be referred to as the Home URSP (H-URSP).
2. The ASMM in the V-PCF may check application-slice mappings in the H-URSP against those in the URSP in the VPLMN (V-URSP) and update the H-URSP to arrive at an enriched URSP (E-URSP) that may be used by the UE while in the VPLMN. For that purpose, the ASMM may, as sub-steps:
   a. Determine which applications are listed in both the H-URSP and the V-URSP. This set of application may be denoted at A_{b}. For applications that are only listed in the V-URSP, the mechanisms from the prior art [4] may be used to determine the S-NSSAIs of network slices that may be used in the VPLMN and create the corresponding rule(s) for inclusion in the enriched URSP (E-URSP).
   b. For the applications in A_{b}, determine which applications are linked to different S-NSSAIs in the H-URSP and the V-URSP. These applications may form a subset A_{bd} from the set A_{b}. For the applications that are linked to the same S-NSSAI, the URSP rule from the H-URSP may be used and retained in the E-URSP.
   c. As an optional sub-step, for the applications in A_{bd}, determine for each application whether the different S-NSSAls may be mapped to one another, for example using the mechanisms in the prior art [2,3,4]. For the network slices of the applications A_{bd} for which such slice-slice mappings exist, the rule for the E-URSP may be created using those mechanisms. The subset of applications in A_{bd} for which a slice-slice mapping is not available may be denoted as A_{bdnm}.
   d. For the applications in A_{bdnm}, use the URSP rule from the V-URSP to enrich the H-URSP and arrive at the E-URSP. As explained elsewhere, this may for example involve overwriting the slice identifier in the URSP rule from the H-URSP by the slice identifier in the URSP rule from the V-URSP, thereby effectively remapping the application to the network slice identified in the V-URSP.
3. The V-PCF may send the E-URSP to the UE, for example according to the existing procedures in TS 23.502.

With continued reference to the ASMM function, the following embodiments illustrate that the ASMM may be instanced in several entities, such as the V-PCF (as described with reference to Fig. 2), the H-PCF and/or the UE. In addition, in embodiments in which the ASMM is instanced in a PCF of a network, the separate instances of the ASMM may, but do not need to be, provided in both the H-PCF and the V-PCF. Such multiple instances of the ASMM may be provided to account for the role of the home network and the visited network switching, e.g., to allow for symmetry in operation. However, such multiple instances may also be provided to allow for a distributed implementation of the ASMM function in which individual (sub-)steps, such as those described with reference to Fig. 2, are performed by separate instances of the ASMM function, with these separate instances together generating the E-URSP.

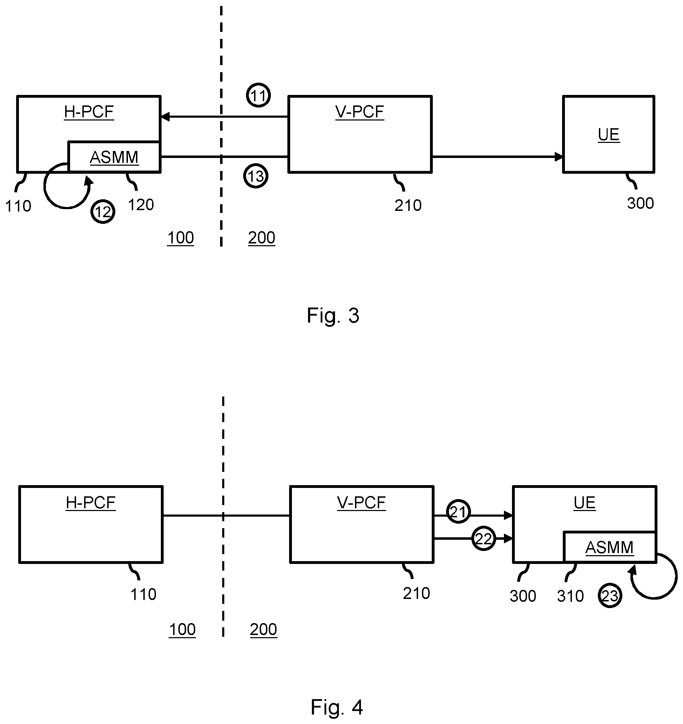

**Fig. 3** shows an example in which the ASMM function 120 is provided in the H-PCF 110. Here, the information on application-slice mappings in the VPLMN 200 may be transmitted from the V-PCF 210 to the H-PCF 110, e.g., at the request of the H-PCF, and the ASMM 120 in the H-PCF may generate the E-URSP. The E-URSP may then be sent to the UE 300 in the VPLMN, e.g., via the V-PCF 210. Compared to the Fig. 2 embodiment, in this embodiment, the HPLMN 100 may retain more control over the creation and enhancement of the E-URSP that may be sent to the UE as it may be generated within the HPLMN. This may involve the following steps:
11. The information on application-slice mappings in the VPLMN may be sent from the V-PCF to the H-PCF, e.g., at the request of the H-PCF.
12. The ASMM in the H-PCF may create the E-URSP based on the H-URSP and the information on application-slice mappings received from the V-PCF, e.g., by updating the H-URSP as described elsewhere. As also described elsewhere, such information on application-slice mappings may for example be obtained in form of the V-URSP.
13. The H-PCF may send the E-URSP to the UE via the V-PCF.

**Fig. 4** shows an example in which the ASMM function 310 may be instanced in the UE 300. In this example, the H-URSP from the HPLMN 100 and information on application-slice mappings from the VPLMN 200 may both sent to the UE 300, e.g., at the request of the UE. The instance of the ASMM 310 in the UE may then locally generate the E-URSP. This approach may be efficient as only the applications that are actually installed or used on the UE may have to be considered for an updated application-slice mapping, as opposed to all applications that may be listed in a URSP. Although not shown in Fig. 4 but explained elsewhere in this specification, the UE may also notify the HPLMN of the modifications to the H-URSP.

This may involve the following steps:
21. The H-PCF may send the H-URSP to the UE via the V-PCF, for example at the request of the UE .
22. The V-PCF may send the information on application-slice mappings in the VPLMN to the UE, for example in form of a V-URSP.
23. The instance of the ASMM function in the UE may create the E-URSP based on the received H-URSP and the information on application-slice mappings data from the V-PCF.

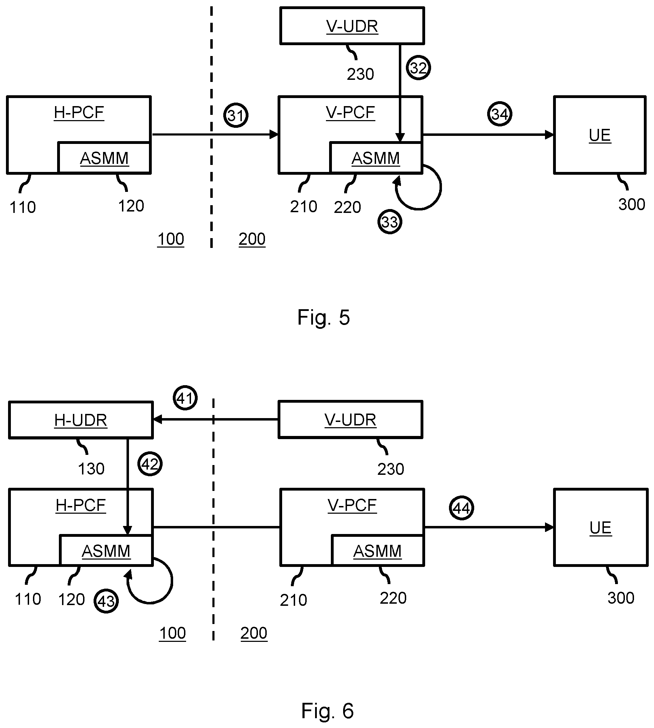

**Fig. 5** shows an example in which application information from a unified data repository 230 (UDR) in the visited network 200 (with the UDR also being referred to as V-UDR) is used to generate the E-URSP. Such information on applications in the V-UDR 230 may be used by the ASMM function 220, which in this example is instanced in both the H-PCF 110 and the V-PCF 220, in determining the required modifications to the H-URSP. The V-UDR may for example contain information such as OSAppld and OSid (TS 23.503 section 6.1.3.20) for a certain application, but may also contain an application-slice mapping for the application. The application-slice mapping for the application may be used during the creation of the E-URSP.

This may involve the following steps:
31. The H-PCF may send the URSP to the V-PCF in the VPLMN, for example according to known procedures in TS 23.502 section 4.16.12.2.
32. The UDR 230 in the VPLMN denoted as V-UDR may send application data to the ASMM residing in the V-PCF. The V-UDR may contain information such as OSAppld and OSid (TS 23.503 section 6.1.3.20). Such information may be sent based on, e.g., a request-response or publish-subscribe mechanism between the V-UDR and the V-PCF.
33. The ASMM in the V-PCF may create E-URSP based on the H-URSP and based on the application data provided by the V-UDR.
34. The V-PCF may send the E-URSP to the UE, for example according to the known procedures in TS 23.502.

**Fig. 6** shows an example in which the unified data repository in the home network (also referred to as H-UDR) and the V-UDR exchange application data. Namely, the H-UDR 130 and V-UDR 230 may exchange information about application-slice mappings in general (e.g., not linked to the URSPs of individual UEs). Such information may enable the H-PCF to create the E-URSP without directly interacting with the V-PCF 210 when a UE starts roaming in the VPLMN 200. It is noted that the V-PCF 210 may nevertheless have a role in the passing on of the E-URSP to the UE 300.

This may involve the following steps:
41. The H-UDR and the V-UDR may exchange general data about application-slice mappings, e.g., not necessarily linked to a particular UE. This may for example be based on a request-response or publish-subscribe mechanism between the H-UDR and the V-UDR.
42. By using the application-slice mapping data exchanged with the V-UDR, the H-UDR may provide relevant information to the ASMM function in the H-PCF on the application-slice mappings in the VPLMN.
43. The ASMM in the H-PCF may create the E-URSP based on the H-URSP and based on the application data obtained from the H-UDR after the data exchange between the H-UDR and the V-UDR.
44. The H-PCF may send the E-URSP to the UE via the V-PCF.

**Fig. 7** shows an example in which the E-URSP is generated in the VPLMN 200, namely by an ASMM function 220 instanced in the V-PCF 210, and then sent by the V-PCF 210 to the HPLMN 100 so that entities from the HPLMN (e.g., H-PCF, H-UDR) may learn about the application-slice mappings from the VPLMN, e.g., for later use. For example, the H-PCF may, based on such information, later autonomously create an enriched URSP that is already suitable for the VPLMN without a need for an later analysis, e.g., when a UE subsequently visits the VPLMN. In some examples, the V-PCF 210 may send the entire E-URSP to the HPLMN, while in other examples, the V-PCF 210 may send only the updated or new application-slice mappings in the E-URSP to the HPLMN. The ASMM function 220 in the V-PCF may also simply notify the ASMM function 120 in the H-PCF that there has been an enhancement of the URSP, without providing the E-URSP. Both the receipt of the E-URSP and the sole notification of the enhancement may enable the H-PCF to reprovision the UE with the original URSP after the UE leaves the VPLMN. Optionally, the H-PCF may store the URSPs for multiple networks for later reuse, e.g., to later generate E-URSPs.

This sending of the E-URSP or notification may involve the following steps: (Steps 51-53 may correspond to steps 1-3 in the Fig. 2 embodiment)
54. The ASMM function instanced in the V-PCF may send the E-URSP created in the VPLMN to the ASMM instanced in the H-PCF. Additionally, or alternatively, the ASMM function in the V-PCF may notify the ASMM function in the H-PCF that a E-URSP is provisioned to the UE, without sending the E-URSP itself to the ASMM in the H-PCF.

**Fig. 8** shows an example in which the update of the URSP is used in a follow-up step to update the mapping to the Subscribed NSSAI. This may be beneficial to ensure that the UE may use the desired slice in the VPLMN and is not prevented from using the slice because the slice ID (S-NSSAI) is not in the Subscribed NSSAI. According to TS 23.501 [2], the AMF may decide the S-NSSAI values to be used in the VPLMN and the mapping to the Subscribed S-NSSAIs. This may be utilized in the follow-up step after the URSP has been updated: the AMF 140 in the HPLMN 100 may map the slice identifier (e.g., S-NSSAI) from the V-URSP that was added or that replaced an NSSAI to come to the E-URSP to a slice identifier (e.g., S-NSSAI) that is already in the Subscribed NSSAI. This may involve the following steps:
(Steps 61-63 may correspond to steps 1-3 in the Fig. 2 embodiment)
64. The V-PCF may inform the H-PCF of the enhancement of the URSP and may also include the updated URSP rules.
65. The H-PCF may forward the updated URSP rules to the AMF in the HPLMN, e.g., by sending the E-URSP or only the updated rules.
66. The AMF may create a mapping between the slice identifier,of the replacement network slice and a known slice identifier from the home network. For example, the AMF may select a known S-NSSAI that is already in the Subscribed NSSAI. Since this mapping does not affect the already-created URSP, a standard S-NSSAI value such as the one for enhanced Mobile Broadband (eMBB) may be used.

Although not shown as an explicit step in Fig. 8, after creating the mapping, the AMF may forward the Subscribed NSSAI to other functions in the mobile network, such as the Unified Data Management (UDM), for later use.

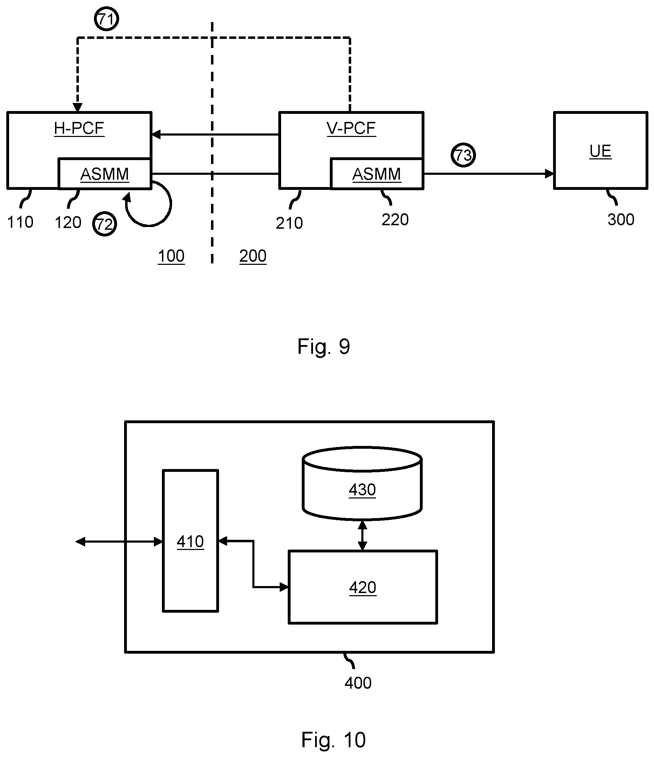

**Fig. 9** shows an example in which application-slice mapping information from the VPLMN is made available to the HPLMN via an administrative process, such as a process associated with or governed by a roaming agreement or service-level agreement. Accordingly, the information about the application-slice mappings in the VPLMN may be made available to the HPLMN through the roaming agreement or SLA between the both networks to enable the HPLMN to generate the E-URSP based on the application-slice mappings in the VPLMN. Such administrative processes may cover many UEs at once and/or may be independent of individual UEs. After the E-URSP is generated, the E-URSP may be sent via the V-PCF to the UE.

This may, for an SLA example, involve the following steps:
71. The HPLMN and VPLMN may have a pre-defined Service Level Agreement (SLA) defining, among other aspects, the information about the application-slice mappings between the two networks, and in some cases, may also define a procedure to exchange this information.
72. The ASMM function in the H-PCF may create the E-URSP based on the H-URSP and the information on application-slice mappings made available via the SLA.
73. The H-PCF may send the E-URSP to the UE via the V-PCF.

Another example which is not separately shown in a figure is the following. The validity of the updates in the E-URSP, or in general the validity of the E-URSP, may be restricted. For example, the Location Criteria or Time Window are used as components of the Route Selection Validation Criteria as defined in TS 23.503 section 6.6.2.1. These restrictions may optionally be used as part of the enriched URSP to restrict the validity of the updated application-slice mappings to one or more geographic locations (such as a geographical region representing the country of origin, or coverage area, of the visited network) and/or time span. The time span may for example be defined by way of an expiry time and/or data or as a time duration.

Fig. 10 shows a system 400 for providing a user equipment with a route selection policy for data traffic routing in a visited network. The system 400 may in some embodiments represent an instance of the application-slice mapping modification function as described elsewhere in this specification, meaning that the system 400 may implement such an application-slice mapping modification function. The system 400 may comprise a network interface 410 for data communication with a mobile network and with entities associated with the mobile network, for network functions in the mobile network. The network interface 410 may for example be a wired communication interface, such as an Ethernet or fibre-optic based interface, to a fixed (e.g., non-mobile) part of the mobile network. Alternatively, the network interface 410 may be a wireless communication interface, such as a radio access interface to a 5G or later generation mobile network, or a Wi-Fi interface, or a satellite data communication interface, etc. In some examples, the system 400 may be a subsystem of a larger system or device. For example, a network node implementing one or more network functions may comprise the system 400 as a subsystem. Another example is that the system 400 may represent a subsystem of a user equipment, such as a mobile device. In such examples, the network interface 410 may also be an internal interface of the larger system or device, for example a virtual, software-based network interface.

The system 400 may further comprise a processor subsystem 420 which may be configured, e.g., by hardware design or software, to perform the operations described in this specification in as far as pertaining to the entity that the processor system is embodying, e.g., the application-slice mapping modification function. In general, the processor subsystem 420 may be embodied by a single Central Processing Unit (CPU), such as a x86 or ARM-based CPU, but also by a combination or system of such CPUs and/or other types of processors. In embodiments where the system 400 is distributed over different entities, e.g., over different network nodes, the processor subsystem 420 may also be distributed, e.g., over the CPUs or other processors of such different network nodes. As also shown in Fig. 10, the processor system 400 may comprise a data storage 430, such as a hard drive, a solid-state drive, or an array of such hard and/or solid-state drives, etc., which may be used to store data. In some examples, the system 400 may be implemented by a network node, or by a system of network nodes jointly implementing the application-slice mapping modification function. In some examples, the system 400 may implement further network functions, such as for example a policy control function. In other examples, the system 400 may be implemented by a user equipment, such as a mobile device.

In general, each entity described in this specification may be embodied as, or in, a device or apparatus. The device or apparatus may comprise one or more (micro)processors which execute appropriate software. The processor(s) of a respective entity may be embodied by one or more of these (micro)processors. Software implementing the functionality of a respective entity may have been downloaded and/or stored in a corresponding memory or memories, e.g., in volatile memory such as RAM or in non-volatile memory such as Flash. Alternatively, the processor(s) of a respective entity may be implemented in the device or apparatus in the form of programmable logic, e.g., as a Field-Programmable Gate Array (FPGA). Any input and/or output interfaces may be implemented by respective interfaces of the device or apparatus. In general, each functional unit of a respective entity may be implemented in the form of a circuit or circuitry. A respective entity may also be implemented in a distributed manner, e.g., involving different devices or apparatus.

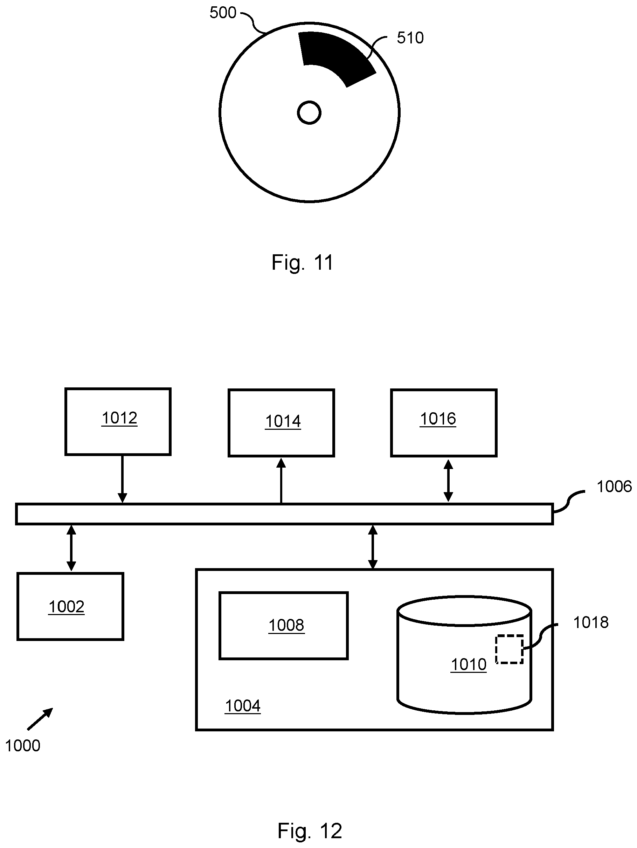

It is noted that any of the methods described in this specification, for example in any of the claims, may be implemented on a computer as a computer implemented method, as dedicated hardware, or as a combination of both. Instructions for the computer, e.g., executable code, may be stored on a computer-readable medium 500 as for example shown in **Fig. 11****,** e.g., in the form of a series 510 of machine-readable physical marks and/or as a series of elements having different electrical, e.g., magnetic, or optical properties or values. The executable code may be stored in a transitory or non-transitory manner. Examples of computer-readable mediums include memory devices, optical storage devices, integrated circuits, servers, online software, etc. Fig. 11 shows by way of example an optical storage device 500.

**Fig. 12** is a block diagram illustrating an exemplary data processing system 1000 that may be used in the embodiments described in this specification. Such data processing systems include data processing entities described in this specification, including but not limited to any system, network function, network node or system of network nodes or user equipment. The data processing system 1000 may include at least one processor 1002 coupled to memory elements 1004 through a system bus 1006. As such, the data processing system may store program code within memory elements 1004. Furthermore, processor 1002 may execute the program code accessed from memory elements 1004 via system bus 1006. In one aspect, data processing system may be implemented as a computer that is suitable for storing and/or executing program code. It should be appreciated, however, that data processing system 1000 may be implemented in the form of any system including a processor and memory that is capable of performing the functions described within this specification.

The memory elements 1004 may include one or more physical memory devices such as, for example, local memory 1008 and one or more bulk storage devices 1010. Local memory may refer to random access memory or other non-persistent memory device(s) generally used during actual execution of the program code. A bulk storage device may be implemented as a hard drive, solid state disk or other persistent data storage device. The data processing system 1000 may also include one or more cache memories (not shown) that provide temporary storage of at least some program code in order to reduce the number of times program code is otherwise retrieved from bulk storage device 1010 during execution.

Input/output (I/O) devices depicted as input device 1012 and output device 1014 optionally can be coupled to the data processing system. Examples of input devices may include, but are not limited to, for example, a microphone, a keyboard, a pointing device such as a mouse, a game controller, a Bluetooth controller, a VR controller, and a gesture-based input device, or the like. Examples of output devices may include, but are not limited to, for example, a monitor or display, speakers, or the like. Input device and/or output device may be coupled to data processing system either directly or through intervening I/O controllers. A network adapter 1016 may also be coupled to data processing system to enable it to become coupled to other systems, computer systems, remote network devices, and/or remote storage devices through intervening private or public networks. The network adapter may comprise a data receiver for receiving data that is transmitted by said systems, devices and/or networks to said data and a data transmitter for transmitting data to said systems, devices and/or networks. Radios, modems, cable modems, and ethernet cards are examples of different types of network adapter that may be used with data processing system 1000.

As shown in Fig. 12, memory elements 1004 may store an application 1018. It should be appreciated that data processing system 1000 may further execute an operating system (not shown) that can facilitate execution of the application. The application, being implemented in the form of executable program code, can be executed by data processing system 1000, e.g., by processor 1002. Responsive to executing the application, the data processing system may be configured to perform one or more operations to be described herein in further detail.

For example, data processing system 1000 may represent an embodiment of an application-slice mapping modification function as described in this specification. In that case, application 1018 may represent an application that, when executed, configures data processing system 1000 to perform the functions described with reference to the application-slice mapping modification function. In another example, data processing system 1000 may represent or be part of a network node or system of network nodes as described in this specification. In that case, application 1018 may represent an application that, when executed, configures data processing system 1000 to perform the functions described with reference to the network node or system of network nodes. In another example, data processing system 1000 may represent or be part of a user equipment as described in this specification. In that case, application 1018 may represent an application that, when executed, configures data processing system 1000 to perform the functions described with reference to the user equipment.

In accordance with an abstract of the present patent application or patent, a system and method may be provided for providing a user equipment with a route selection policy for data traffic routing in a visited network. For that purpose, the system and method may obtain a route selection policy for a home network of the user equipment, and for at least one application which is listed in the said route selection policy and for which application a network slice identified in the home route selection policy is not available for use in the visited network for data traffic of the application, determine a replacement network slice and modify the home route selection policy to include a mapping associating the application with the replacement network slice. The user equipment may be provided with access to the updated route selection policy. This way, the user equipment may be enabled to make use of a replacement network slice in the visited network when the network slice identified in the home route selection policy is not available for use in the visited network for data traffic of the application.

It should be noted that the above-mentioned embodiments illustrate rather than limit the invention, and that those skilled in the art will be able to design many alternative embodiments without departing from the scope of the appended claims.

In the claims, any reference signs placed between parentheses shall not be construed as limiting the claim. Use of the verb "comprise" and its conjugations does not exclude the presence of elements or stages other than those stated in a claim. The article "a" or "an" preceding an element does not exclude the presence of a plurality of such elements. Expressions such as "at least one of" when preceding a list or group of elements represent a selection of all or of any subset of elements from the list or group. For example, the expression, "at least one of A, B, and C" should be understood as including only A, only B, only C, both A and B, both A and C, both B and C, or all of A, B, and C. The invention may be implemented by means of hardware comprising several distinct elements, and by means of a suitably programmed computer. In the device claim enumerating several means, several of these means may be embodied by one and the same item of hardware. The mere fact that certain measures are recited in mutually different dependent claims does not indicate that a combination of these measures cannot be used to advantage.

## Claims

1. A computer-implemented method for providing a user equipment (300) with a route selection policy, RSP, for data traffic routing in a visited network (200), wherein the route selection policy comprises one or more mappings associating applications with respective network slices of a network, wherein a mapping comprises an application identifier of an application and a slice identifier of a network slice to be selected by the user equipment for data traffic of the application, the method comprising establishing an application-slice mapping modification function, ASMM, which is part of, or connected to, a policy control function (110) in a home network (100) of the user equipment, the method further comprising:
- obtaining a route selection policy for the home network of the user equipment, thereby obtaining a home route selection policy;
- for at least one application which is listed in the home route selection policy and for which application the network slice identified in the home route selection policy is not available for use in the visited network for data traffic of the application, determining a replacement network slice which is available for use in the visited network for the data traffic of the application;
- generating an updated route selection policy, comprising modifying the home route selection policy to include a mapping associating the application with the replacement network slice; wherein the updated route selection policy is generated by the application-slice mapping modification function based on application-slice mapping data which is obtained by a unified data repository in the home network from a unified data repository in the visited network and
- providing the user equipment with access to the updated route selection policy.

2. The method according to claim 1, further comprising:
- obtaining a route selection policy from the visited network, thereby obtaining a visited route selection policy; and
- determining the replacement network slice from the visited route selection policy by determining the slice identifier listed for the application in the visited route selection policy.

3. The method according to claim 2, wherein generating the updated route selection policy comprises overwriting the slice identifier for the application in the home route selection policy by the slice identifier listed for the application in the visited route selection policy.

4. The method according to claim 3, wherein the overwriting is performed selectively if the slice identifiers differ or indiscriminately by overwriting the slice identifiers for a set of applications in the home route selection policy by the slice identifiers listed for the set of applications in the visited route selection policy.

5. The method according to any one of claims 2 to 4, further comprising:
- if slice correspondence data is available which maps network slices in a source network to corresponding network slices in a target network and which slice correspondence data comprises a mapping from the network slice identified in the home route selection policy to a replacement network slice which is available for use in the visited network, using the replacement network slice as provided by slice correspondence data in the updated route selection policy; and otherwise
- determining the replacement network slice from the visited route selection policy.

6. The method according to any one of claims 1 to 5, wherein generating the updated route selection policy comprises restricting a validity of the mapping of the application to the replacement network slice.

7. The method according to claim 6, wherein the validity is restricted to a geolocation and/or restricted in time.

8. The method according to any one of the above claims, wherein providing the user equipment with access to the updated route selection policy comprises providing the updated route selection policy to a policy control function in the visited network for enabling the policy control function to provide the updated route selection policy to the user equipment.

9. The method according to any one of the above claims, further comprising providing the updated route selection policy to a policy control function in the home network.

10. The method according to any one of the above claims, further comprising providing the updated route selection policy to an access and mobility management function in the home network to enable the access and mobility management function to include a mapping for the replacement network slice to a subscribed network slice in the home network.

11. The method according to any one of the above claims, wherein the method is performed at or by the user equipment.

12. A transitory or non-transitory computer-readable medium comprising data representing a computer program, the computer program comprising instructions for causing a processor system to perform the method according to any one of claims 1 to 11.

13. A system (400) for providing a user equipment with a route selection policy, RSP, for data traffic routing in a visited network, wherein the route selection policy comprises one or more mappings associating applications with respective network slices of a network, wherein a mapping comprises an application identifier of an application and a slice identifier of a network slice to be selected by the user equipment for data traffic of the application, the system comprising:
- a network interface (410);
- a processor subsystem (420) configured to:
- via the network interface, obtain a route selection policy for a home network of the user equipment, thereby obtaining a home route selection policy;
- for at least one application which is listed in the home route selection policy and for which application the network slice identified in the home route selection policy is not available for use in the visited network for data traffic of the application, determining a replacement network slice which is available for use in the visited network for the data traffic of the application;
- generate an updated route selection policy, comprising modifying the home route selection policy to include a mapping associating the application with the replacement network slice; and
- provide the user equipment with access to the updated route selection policy, wherein the system is configured to establish an application-slice mapping modification function, ASMM, and configured for communicating with a policy control function of the home network and wherein the updated route selection policy is generated by the application-slice mapping modification function based on application-slice mapping data which is obtained by a unified data repository in the home network from a unified data repository in the visited network.

14. A network node or system of network nodes comprising the system according to claim 13, wherein the system is configured to establish an application-slice mapping modification function in a network and configured for communicating with a policy control function of the network.

## Patentansprüche

1. Computerimplementiertes Verfahren zum Bereitstellen einer Routenauswahlrichtlinie, RSP, an ein Benutzergerät (300) zum Routing von Datenverkehr in einem besuchten Netzwerk (200), wobei die Routenauswahlrichtlinie eine oder mehrere Zuordnungen umfasst, die Anwendungen mit jeweiligen Netzwerk-Slices eines Netzwerks verknüpfen, wobei eine Zuordnung eine Anwendungskennung einer Anwendung und eine Slice-Kennung eines Netzwerk-Slices umfasst, der von dem Benutzergerät für Datenverkehr der Anwendung auszuwählen ist, wobei das Verfahren das Einrichten einer Anwendungs-Slice-Zuordnungsmodifikationsfunktion, ASMM, aufweist, die Teil einer Richtliniensteuerungsfunktion (110) in einem Heimnetzwerk (100) des Benutzergeräts ist, oder mit dieser verbunden ist, wobei das Verfahren weiterhin aufweist:
- Erhalten einer Routenauswahlrichtlinie für das Heimnetzwerk des Benutzergeräts, wodurch eine Heim-Routenauswahlrichtlinie erhalten wird;
- für zumindest eine Anwendung, die in der Heim-Routenauswahlrichtlinie aufgeführt ist und für welche Anwendung der in der Heim-Routenauswahlrichtlinie identifizierte Netzwerk-Slice zur Verwendung in dem besuchten Netzwerk für Datenverkehr der Anwendung nicht verfügbar ist, Bestimmen eines Ersatz-Netzwerk-Slices, der zur Verwendung in dem besuchten Netzwerk für den Datenverkehr der Anwendung verfügbar ist;
- Erzeugen einer aktualisierten Routenauswahlrichtlinie, aufweisend ein Modifizieren der Heim-Routenauswahlrichtlinie, damit diese eine Zuordnung enthält, die die Anwendung mit dem Ersatz-Netzwerk-Slice verknüpft; wobei die aktualisierte Routenauswahlrichtlinie durch die Anwendungs-Slice-Zuordnungsmodifikationsfunktion auf Grundlage von Anwendungs-Slice-Zuordnungsdaten erzeugt wird, die durch ein einheitliches Daten-Repository in dem Heimnetzwerk von einem einheitlichen Daten-Repository in dem besuchten Netzwerk erhalten werden; und
- Bereitstellen eines Zugriffs auf die aktualisierte Routenauswahlrichtlinie an das Benutzergerät.

2. Verfahren nach Anspruch 1, weiterhin aufweisend:
- Erhalten einer Routenauswahlrichtlinie von dem besuchten Netzwerk, wodurch eine Besuchs-Routenauswahlrichtlinie erhalten wird; und
- Bestimmen des Ersatz-Netzwerk-Slices aus der Besuchs-Routenauswahlrichtlinie durch Bestimmen der für die Anwendung in der Besuchs-Routenauswahlrichtlinie aufgeführten Slice-Kennung.

3. Verfahren nach Anspruch 2, wobei das Erzeugen der aktualisierten Routenauswahlrichtlinie ein Überschreiben der Slice-Kennung für die Anwendung in der Heim-Routenauswahlrichtlinie mit der für die Anwendung in der Besuchs-Routenauswahlrichtlinie aufgeführten Slice-Kennung aufweist.

4. Verfahren nach Anspruch 3, wobei das Überschreiben selektiv durchgeführt wird, wenn sich die Slice-Kennungen unterscheiden, oder unterschiedslos durch Überschreiben der Slice-Kennungen für einen Satz von Anwendungen in der Heim-Routenauswahlrichtlinie mit den für den Satz von Anwendungen in der Besuchs-Routenauswahlrichtlinie aufgeführten Slice-Kennungen.

5. Verfahren nach einem der Ansprüche 2 bis 4, weiterhin aufweisend:
- falls Slice-Korrespondenzdaten verfügbar sind, die Netzwerk-Slices in einem Quellnetzwerk entsprechenden Netzwerk-Slices in einem Zielnetzwerk zuordnen und welche Slice-Korrespondenzdaten eine Zuordnung von dem in der Heim-Routenauswahlrichtlinie identifizierten Netzwerk-Slice zu einem Ersatz-Netzwerk-Slice aufweisen, der zur Verwendung in dem besuchten Netzwerk verfügbar ist, Verwenden des durch die Slice-Korrespondenzdaten bereitgestellten Ersatz-Netzwerk-Slices in der aktualisierten Routenauswahlrichtlinie; und andernfalls
- Bestimmen des Ersatz-Netzwerk-Slices aus der Besuchs-Routenauswahlrichtlinie.

6. Verfahren nach einem der Ansprüche 1 bis 5, wobei das Erzeugen der aktualisierten Routenauswahlrichtlinie ein Beschränken einer Gültigkeit der Zuordnung der Anwendung zu dem Ersatz-Netzwerk-Slice aufweist.

7. Verfahren nach Anspruch 6, wobei die Gültigkeit auf eine Geolokation beschränkt und/oder zeitlich beschränkt ist.

8. Verfahren nach einem der vorhergehenden Ansprüche, wobei das Bereitstellen eines Zugriffs auf die aktualisierte Routenauswahlrichtlinie an das Benutzergerät ein Bereitstellen der aktualisierten Routenauswahlrichtlinie an eine Richtliniensteuerungsfunktion in dem besuchten Netzwerk aufweist, um es der Richtliniensteuerungsfunktion zu ermöglichen, dem Benutzergerät die aktualisierte Routenauswahlrichtlinie bereitzustellen.

9. Verfahren nach einem der vorhergehenden Ansprüche, weiterhin aufweisend ein Bereitstellen der aktualisierten Routenauswahlrichtlinie an eine Richtliniensteuerungsfunktion in dem Heimnetzwerk.

10. Verfahren nach einem der vorhergehenden Ansprüche, weiterhin aufweisend ein Bereitstellen der aktualisierten Routenauswahlrichtlinie an eine Zugriffs- und Mobilitätsverwaltungsfunktion in dem Heimnetzwerk, um es der Zugriffs- und Mobilitätsverwaltungsfunktion zu ermöglichen, eine Zuordnung für den Ersatz-Netzwerk-Slice zu einem abonnierten Netzwerk-Slice in dem Heimnetzwerk aufzunehmen.

11. Verfahren nach einem der vorhergehenden Ansprüche, wobei das Verfahren an dem oder durch das Benutzergerät durchgeführt wird.

12. Flüchtiges oder nichtflüchtiges computerlesbares Medium, aufweisend Daten, die ein Computerprogramm darstellen, wobei das Computerprogramm Anweisungen aufweist, um ein Prozessorsystem zu veranlassen, das Verfahren nach einem der Ansprüche 1 bis 11 durchzuführen.

13. System (400) zum Bereitstellen einer Routenauswahlrichtlinie, RSP, an ein Benutzergerät zum Routing von Datenverkehr in einem besuchten Netzwerk, wobei die Routenauswahlrichtlinie eine oder mehrere Zuordnungen umfasst, die Anwendungen mit jeweiligen Netzwerk-Slices eines Netzwerks verknüpfen, wobei eine Zuordnung eine Anwendungskennung einer Anwendung und eine Slice-Kennung eines Netzwerk-Slices umfasst, der von dem Benutzergerät für Datenverkehr der Anwendung auszuwählen ist, wobei das System aufweist:
- eine Netzwerkschnittstelle (410);
- ein Prozessorsubsystem (420), das dazu konfiguriert ist:
- über die Netzwerkschnittstelle eine Routenauswahlrichtlinie für ein Heimnetzwerk des Benutzergeräts zu erhalten, wodurch eine Heim-Routenauswahlrichtlinie erhalten wird;
- für zumindest eine Anwendung, die in der Heim-Routenauswahlrichtlinie aufgeführt ist und für welche Anwendung der in der Heim-Routenauswahlrichtlinie identifizierte Netzwerk-Slice zur Verwendung in dem besuchten Netzwerk für Datenverkehr der Anwendung nicht verfügbar ist, einen Ersatz-Netzwerk-Slice zu bestimmen, der zur Verwendung in dem besuchten Netzwerk für den Datenverkehr der Anwendung verfügbar ist;
- eine aktualisierte Routenauswahlrichtlinie zu erzeugen, aufweisend ein Modifizieren der Heim-Routenauswahlrichtlinie, damit diese eine Zuordnung enthält, die die Anwendung mit dem Ersatz-Netzwerk-Slice verknüpft; und
- dem Benutzergerät Zugriff auf die aktualisierte Routenauswahlrichtlinie bereitzustellen, wobei das System dazu konfiguriert ist, eine Anwendungs-Slice-Zuordnungsmodifikationsfunktion, ASMM, einzurichten, und zur Kommunikation mit einer Richtliniensteuerungsfunktion des Heimnetzwerks konfiguriert ist, und wobei die aktualisierte Routenauswahlrichtlinie durch die Anwendungs-Slice-Zuordnungsmodifikationsfunktion auf Grundlage von Anwendungs-Slice-Zuordnungsdaten erzeugt wird, die durch ein einheitliches Daten-Repository in dem Heimnetzwerk von einem einheitlichen Daten-Repository in dem besuchten Netzwerk erhalten werden.

14. Netzwerkknoten oder System von Netzwerkknoten, aufweisend das System nach Anspruch 13, wobei das System dazu konfiguriert ist, eine Anwendungs-Slice-Zuordnungsmodifikationsfunktion in einem Netzwerk einzurichten, und zur Kommunikation mit einer Richtliniensteuerungsfunktion des Netzwerks konfiguriert ist.

## Revendications

1. Procédé mis en œuvre par ordinateur pour fournir à un équipement utilisateur (300) une politique de sélection de route, RSP, pour un routage de trafic de données dans un réseau (200) visité, dans lequel la politique de sélection de route comprend un ou plusieurs mappages associant des applications à des tranches de réseau respectives d'un réseau, dans lequel un mappage comprend un identifiant d'application d'une application et un identifiant de tranche d'une tranche de réseau devant être sélectionnée par l'équipement utilisateur pour le trafic de données de l'application, le procédé comprenant l'établissement d'une fonction de modification de mappage application-tranche, ASMM, qui fait partie d'une fonction de contrôle de politique (110), ou y est connectée, dans un réseau domestique (100) de l'équipement utilisateur, le procédé comprenant en outre :
- l'obtention d'une politique de sélection de route pour le réseau domestique de l'équipement utilisateur, obtenant ainsi une politique de sélection de route domestique ;
- pour au moins une application qui est listée dans la politique de sélection de route domestique et pour laquelle application la tranche de réseau identifiée dans la politique de sélection de route domestique n'est pas disponible pour une utilisation dans le réseau visité pour le trafic de données de l'application, la détermination d'une tranche de réseau de remplacement qui est disponible pour une utilisation dans le réseau visité pour le trafic de données de l'application ;
- la génération d'une politique de sélection de route mise à jour, comprenant la modification de la politique de sélection de route domestique pour inclure un mappage associant l'application à la tranche de réseau de remplacement ; dans lequel la politique de sélection de route mise à jour est générée par la fonction de modification de mappage application-tranche sur la base de données de mappage application-tranche qui sont obtenues par un référentiel de données unifié dans le réseau domestique à partir d'un référentiel de données unifié dans le réseau visité et
- la fourniture à l'équipement utilisateur de l'accès à la politique de sélection de route mise à jour.

2. Procédé selon la revendication 1, comprenant en outre :
- l'obtention d'une politique de sélection de route à partir du réseau visité, obtenant ainsi une politique de sélection de route visitée ; et
- la détermination de la tranche de réseau de remplacement à partir de la politique de sélection de route visitée en déterminant l'identifiant de tranche listé pour l'application dans la politique de sélection de route visitée.

3. Procédé selon la revendication 2, dans lequel la génération de la politique de sélection de route mise à jour comprend l'écrasement de l'identifiant de tranche pour l'application dans la politique de sélection de route domestique par l'identifiant de tranche listé pour l'application dans la politique de sélection de route visitée.

4. Procédé selon la revendication 3, dans lequel l'écrasement est réalisé sélectivement si les identifiants de tranche diffèrent ou indifféremment en écrasant les identifiants de tranche pour un ensemble d'applications dans la politique de sélection de route domestique par les identifiants de tranche listés pour l'ensemble d'applications dans la politique de sélection de route visitée.

5. Procédé selon l'une quelconque des revendications 2 à 4, comprenant en outre :
- si des données de correspondance de tranche sont disponibles qui mappent des tranches de réseau dans un réseau source par rapport à des tranches de réseau correspondantes dans un réseau cible et lesquelles données de correspondance de tranche comprennent un mappage de la tranche de réseau identifiée dans la politique de sélection de route domestique par rapport à une tranche de réseau de remplacement qui est disponible pour une utilisation dans le réseau visité, l'utilisation de la tranche de réseau de remplacement telle que fournie par les données de correspondance de tranche dans la politique de sélection de route mise à jour ; et sinon
- la détermination de la tranche de réseau de remplacement à partir de la politique de sélection de route visitée.

6. Procédé selon l'une quelconque des revendications 1 à 5, dans lequel la génération de la politique de sélection de route mise à jour comprend la limitation d'une validité du mappage de l'application à la tranche de réseau de remplacement.

7. Procédé selon la revendication 6, dans lequel la validité est limitée à une géolocalisation et/ou limitée dans le temps.

8. Procédé selon l'une quelconque des revendications précédentes, dans lequel la fourniture à l'équipement utilisateur d'un accès à la politique de sélection de route mise à jour comprend la fourniture de la politique de sélection de route mise à jour à une fonction de contrôle de politique dans le réseau visité pour permettre à la fonction de contrôle de politique de fournir la politique de sélection de route mise à jour à l'équipement utilisateur.

9. Procédé selon l'une quelconque des revendications précédentes, comprenant en outre la fourniture de la politique de sélection de route mise à jour à une fonction de contrôle de politique dans le réseau domestique.

10. Procédé selon l'une quelconque des revendications précédentes, comprenant en outre la fourniture de la politique de sélection de route mise à jour à une fonction de gestion d'accès et de mobilité dans le réseau domestique pour permettre à la fonction de gestion d'accès et de mobilité d'inclure un mappage pour la tranche de réseau de remplacement à une tranche de réseau abonnée dans le réseau domestique.

11. Procédé selon l'une quelconque des revendications précédentes, dans lequel le procédé est réalisé au niveau de ou par l'équipement utilisateur.

12. Support transitoire ou non transitoire lisible par ordinateur comprenant des données représentant un programme informatique, le programme informatique comprenant des instructions pour amener un système de processeur à réaliser le procédé selon l'une quelconque des revendications 1 à 11.

13. Système (400) pour fournir à un équipement utilisateur une politique de sélection de route, RSP, pour le routage de trafic de données dans un réseau visité, dans lequel la politique de sélection de route comprend un ou plusieurs mappages associant des applications à des tranches de réseau respectives d'un réseau, dans lequel un mappage comprend un identifiant d'application d'une application et un identifiant de tranche d'une tranche de réseau devant être sélectionnée par l'équipement utilisateur pour le trafic de données de l'application, le système comprenant :
- une interface réseau (410) ;
- un sous-système de processeur (420) configuré pour :
- via l'interface réseau, obtenir une politique de sélection de route pour un réseau domestique de l'équipement utilisateur, obtenant ainsi une politique de sélection de route domestique ;
- pour au moins une application qui est listée dans la politique de sélection de route domestique et pour laquelle application la tranche de réseau identifiée dans la politique de sélection de route domestique n'est pas disponible pour une utilisation dans le réseau visité pour le trafic de données de l'application, la détermination d'une tranche de réseau de remplacement qui est disponible pour une utilisation dans le réseau visité pour le trafic de données de l'application ;
- générer une politique de sélection de route mise à jour, comprenant la modification de la politique de sélection de route domestique pour inclure un mappage associant l'application à la tranche de réseau de remplacement ; et
- fournir à l'équipement utilisateur un accès à la politique de sélection de route mise à jour, dans lequel le système est configuré pour établir une fonction de modification de mappage application-tranche, ASMM, et configuré pour communiquer avec une fonction de contrôle de politique du réseau domestique et dans lequel la politique de sélection de route mise à jour est générée par la fonction de modification de mappage application-tranche sur la base de données de mappage application-tranche qui sont obtenues par un référentiel de données unifié dans le réseau domestique à partir d'un référentiel de données unifié dans le réseau visité.

14. Nœud de réseau ou système de nœuds de réseau comprenant le système selon la revendication 13, dans lequel le système est configuré pour établir une fonction de modification de mappage application-tranche dans un réseau et configuré pour communiquer avec une fonction de contrôle de politique du réseau.
